# NEUE EUROPÄISCHE PATENTSCHRIFT

(11) **EP 0 620 074 B2**
(45) Veröffentlichungstag und Bekanntmachung des Hinweises auf die Entscheidung über den Einspruch: **27.11.2002**
(45) Hinweis auf die Patenterteilung: 17.07.1996
(21) Anmeldenummer: 94105234.2
(22) Anmeldetag: 05.04.1994
(51) Int. Cl.: B23K 9/20

(54) **Befestigung einer elastischen Materiallage an einem metallischen Träger mittels Schweissbolzen**
Fastening of an elastic material layer on a metallic support with welding studs
Fixation d'une couche d'un matériau élastique à un support métallique au moyen de goujons à souder

(30) Priorität: 14.04.1993 DE 4312181
(43) Veröffentlichungstag der Anmeldung: 19.10.1994
(73) Patentinhaber: HBS BOLZENSCHWEISSSYSTEME GmbH & Co. KG, D-85221 Dachau (DE)
(72) Erfinder: Reiter, Thomas, Dr., D-85221 Dachau (DE)
(74) Vertreter: Strehl Schübel-Hopf & Partner

(56) Entgegenhaltungen:
- DE-A- 4 126 741
- DE-U- 8 713 476
- US-A- 3 591 762
- US-A- 3 835 285
- US-A- 3 858 024
- PATENT ABSTRACTS OF JAPAN vol. 7, no. 250 (M-254) 8. November 1983 & JP-A-58 135 776 (MIYAZAKI TAKUZOU) 12. August 1983
- AGM Stud Welder Instruction Manuel 5-91
- Firmenschrift "Nelson Specialty Welding Equipment Corp. Seite D1- 15 Januar 1944
- Firmenschrift "Price List Nelson Specialty Welding Equipment Corp." Deckblatt und Seite 9, 1 Juni 1945
- Firmenschrift "Nelson Specialty Welding Equipment Corp., Securing insulation Material"
- "Affidavit" John C. Jenkins, 18 Mai 1998

## Beschreibung

Zur Wärme- und Schalldämmung, zur Isolierung und für ähnliche Zwecke werden beispielsweise im Kraftfahrzeugbau entsprechende Materiallagen an Karosserieblechen angebracht. Derartige Materiallagen bestehen häufig aus einem im wesentlichen elektrisch nicht-leitenden Faservlies, etwa aus Glas- oder Steinwolle, und sind zur Erhöhung ihrer Festigkeit und zusätzlichen Isolation an der vom Karosserieblech abgewandten Seite mit einer dünnen Metallfolie oder einem metallischen Netz beschichtet.

Werden derartige Isoliermatten mit Hilfe von Schweißbolzen befestigt, die an ihrem hinteren Ende mit einem vergrößerten Kopf zur Fixierung der Materiallage versehen sind, so besteht das Problem, daß die metallische Oberflächenschicht der Matte mit dem notwendigerweise metallischen Schweißbolzen, insbesondere mit dessen Kopf, in Berührung gelangt. Der erste angeschweißte Bolzen stellt dann eine elektrische Verbindung zwischen dem metallischen Träger (dem Karosserieblech) und der leitenden Oberflächenschicht der Matte her, so daß bei den weiteren anzuschweißenden Bolzen der Stromübergang nicht mehr zwischen der Bolzenspitze und dem Träger sondern zwischen der viel größerflächigen Unterseite des Bolzenkopfes und der metallischen Beschichtung erfolgt. Dies führt dazu, daß die Metallschicht im Bereich des Bolzenkopfes verdampft, so daß ihre mechanische Stützfunktion gerade in den Befestigungsbereichen beeinträchtigt wird.

Eine noch größere Schwierigkeit ergibt sich aber daraus, daß der eigentliche Schweißvorgang erst dann einsetzt, wenn der elektrische Kontakt zu der metallischen Beschichtung der Matte durch deren Verdampfung unterbrochen ist. Da der Übergangswiderstand bei diesem Kontakt von Bolzen zu Bolzen verschieden ist, kommt es zu entsprechend unterschiedlichen Schweißergebnissen.

Versucht man, ein sicheres Anschweißen jedes Bolzens am metallischen Träger unabhängig von etwaigen Kontakten bezüglich der metallischen Oberflächenschicht der Matte durch Einsatz entsprechend hoher Schweißenergie sicherzustellen, so erhöht sich der Energie- und gegebenenfalls auch der Zeitaufwand für jede Schweißung. Außerdem ist die Anwendung hoher Schweißströme bei der Bolzenschweißung insbesondere an dünnen, beschichteten Stahlblechen, etwa verzinkten Karosserieblechen, nachteilig, da durch die hohe Wärmezufuhr die Werkstoffstruktur gestört wird und die Beschichtung möglicherweise auch an der von der Schweißung abgewandten Fläche verdampft. In diesem Bereich kann es dann verstärkt Korrosion auftreten.

Wird zur Vermeidung eines leitenden Übergangs zu der metallischen Oberfläche der Isoliermatte die Unterseite des Bolzenkopfes durch Einfügen einer Kunststoffscheibe elektrisch isoliert, so läßt sich zwar ein Kurzschluß an dieser Stelle vermeiden; ein leitender Übergang kann aber immer noch im Bereich des Bolzenschaftes stattfinden. Wegen der geringeren Kontaktflächen in diesem Bereich und der noch weniger vorhersehbaren tatsächlichen Kontaktierung werden aber die Schweißergebnisse noch unterschiedlicher ausfallen. Außerdem erhöht die Isolierscheibe die Fertigungskosten und den Arbeitsaufwand bei der Vorbereitung der Schweißung.

Aus EP-A-0 488 518 ist ein Schweißwerkzeug bekannt, das einen den Schweißbolzen umgebenden Ringkörper aufweist. Dieser Ringkörper ist als Funkenschutz gedacht und soll während des Schweißvorgangs an der Oberfläche des Werkstücks anliegen.

Aus AGM Stud Welder Instruction Manual Model 600SS der AGM Industries, Inc., Canton, MA 02021, U.S.A., Mai 19981, Kapitel APP SH 250C-10, "CUPPED PIN APPLICATION RECOMMENDATIONS", "Foil Faced Insulation - Vapor Barrier" und "Metallic Mesh-Faced Insulation" ist ein Verfahren mit den im ersten Teil des Anspruchs 1 angegebenen Merkmalen bekannt. Diese Druckschrift lehrt, bei der Befestigung von Isolierlagen mit metallischer Oberfläche isolierte Tellerbolzen zu verwenden, um Lichtbogenbildung zwischen dem Bolzenkopf und der Metallfolie zu vermeiden. Als isolierte Tellerbolzen sind solche genannt, bei denen an der Unterseite des Bolzenkopfes eine Isolierscheibe haftet. Sofern es sich bei der metallischen Beschichtung der Isolierlage um Metallgitter, perforiertes Metall o.dergl. handelt, empfiehlt die Druckschrift die zusätzliche Isolierung des Bolzenschaftes.

Die Firmenschriften NELSON Specially Welding Equipment Corp., January 15, 1944, Seite D-1, und NELSON Specially Welding Equipment Corp. "Securing Insulation Material" offenbaren eine Vorrichtung mit den in ersten Teil des Anspruchs 3 angegebenen Merkmalen. Dort wird eine insgesamte nicht-leifende, kompressible Isolierlage mittels unisolierter Tellerbolzen an einem metallischen Träger befestigt.

Der Erfindung liegt die Aufgabe zugrunde, elastische Materiallagen mit leitender Oberflächenbeschichtung an metallischen Trägern mittels Bolzenschweißung mit möglichst geringem Energie- und Zeiteinsatz in gleichbleibender Qualität zu befestigen.

Die erfindungsgemäße Losung dieser Aufgabe ist in den Ansprüchen 1 und 3 angegeben. Dadurch, daß erfindungsgemäß die zu befestigende Materiallage während des Schweißvorgangs zusammengedrückt wird, wird ein Kontakt zwischen dem Bolzenkopf und der metallischen Oberflächenschicht vermieden, so daß auf eine Isolierung des Kopfes verzichtet werden kann. Daraus ergibt sich eine Vereinfachung des gesamten Arbeitsablaufs, da sich das Einfügen einer Isolierscheibe zwischen Bolzenkopf und Materiallage erübrigt. Der gegebenenfalls nur in einem Teilbereich seines Schaftes isolierte Schweißbolzen ist in seiner Herstellung unaufwendig und kommt mit einem Minimum an Isolierstoff aus.

Die Ansprüche 2 und 4 beziehen sich auf eine unaufwendige Maßnahme, die Materiallage in dem den Schweißbolzen umgebenden Bereich gleichmäßig auf Abstand vom Bolzenkopf zusammenzudrücken. Dabei ist die in Anspruch 5 angegebene Weiterbildung für den Arbeitsablauf besonders günstig, da der Abstand während des Schweißvorgangs automatisch gewährleistet wird.

Die Ausgestaltungen der Erfindung nach den Ansprüchen 6 bis 8 beziehen sich auf besonders zweckmäßige und ökonomische Maßnahmen zur Isolierung des Bolzenschaftes. Besteht die Isolierung in einer den Schaft umgebenden Hülse, so kann diese so dimensioniert sein, daß sie sich je nach Anwendungszweck an die jeweils geeignetste Stelle verschieben läßt. Die Hülse kann dabei vor dem Schweißvorgang durch Klebstoff oder Wärmeeinwirkung an dem Schaft fixiert werden. Andererseits ist eine auf den Bolzenschaft aufgebrachte isolierende Beschichtung von der Fertigung her noch weniger aufwendig und frei von der Gefahr, daß sie sich beim Durchdringen der Materiallage verschiebt.

Die in Anspruch 9 angegebene Maßnahme ist insofern von Vorteil, als sie dazu führt, daß eine auf der Materiallage etwa vorhandene Metallfolie beim Durchstoßen möglichst wenig beschädigt wird. Dadurch wird vermieden, daß sich etwa Teile dieser Folie ablösen und an unvorhergesehenen Stellen zu Kurzschlüssen führen; gleichzeitig wird eine Beschädigung der Isolierung am Bolzenschaft selbst vermieden.

In ähnlicher Weise verhindert auch die Maßnahme des Anspruchs 10, daß eine solche Metallfolie beim Durchstechen mit dem Schweißbolzen platzt und etwa Randbereiche der Metallfolie sich nach außen wölben und in Kontakt mit dem Bolzenkopf gelangen.

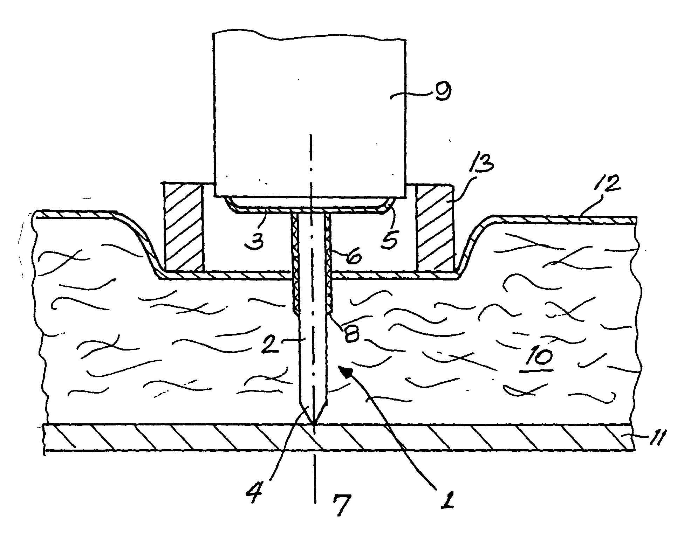

Ein Ausführungsbeispiel der Erfindung wird nachstehend anhand der Zeichnung näher erläutert, die einen schematischen Querschnitt durch eine Anordnung mit einem Schweißwerkzeug während des Anschweißens eines Bolzens darstellt.

Der in der Zeichnung dargestellte Schweißbolzen 1 weist einen Schaft 2 auf, der an seinem hinteren Ende einen großflächigen tellerartigen Kopf 3 trägt und an seiner Spitze 4 nagelartig zugespitzt ist. Der Kopf 3 weist einen nach hinten gewölbten Rand 5 auf, um Beschädigungen der an ihm anliegenden Materiallage zu vermeiden.

Ausgehend von dem Kopf 3 ist der Bolzenschaft 2 über etwa die Hälfte seiner Länge mit einer Isolierung 6 überzogen, die an ihrem vorderen Ende eine zur Spitze 4 und zur Bolzenachse 7 hin verlaufende Abschrägung 8 aufweist.

Der Bolzen 1 ist in die (nicht näher dargestellte) Aufnahme eines bei 9 angedeuteten Schweißwerkzeugs eingesetzt, bei dem es sich beispielsweise um eine Schweißpistole handeln kann. In der Zeichnung hat der Schweißbolzen 1 eine elastisch verformbare Isoliermatte 10 durchstoßen und berührt mit seiner Spitze 4 eine metallische Trägerplatte 11, an der die Matte 10 mittels des Schweißbolzens 1 befestigt werden soll. Auf ihrer von der Platte 11 abgewandten Fläche ist die Matte 10 mit einer ihre mechanische Festigkeit erhöhenden Metallfolie 12 beschichtet.

Mit dem Schweißwerkzeug 9 ist ein als Ringkörper ausgebildeter Niederhalter 13 verbunden, der relativ zu dem Werkzeug 9 so angeordnet ist, daß seine Vorderfläche über die Innenfläche des Bolzenkopfes 3 hinausragt. Auf diese Weise wird dann, wenn die Bolzenspitze 4 die Platte 11 berührt, die Isoliermatte 10 in ihrem den Bolzenkopf 3 umgebenden Bereich zusammengedrückt, so daß die Metallfolie 12 in Abstand von der Vorderfläche des Bolzenkopfes 3 gehalten wird. Elektrischer Kontakt zwischen der Metallfolie 12 und dem Bolzenschaft 2 wird in diesem Zustand durch die den Schaft 2 umgebende Isolierung 6 verhindert.

In dem obigen Ausführungsbeispiel ist angenommen, daß die Isolierung 6 vom Bolzenkopf 3 aus über eine gewisse Länge des Bolzenschaftes 2 verläuft, die mindestens dem Maß entsprechen muß, um das die Isoliermatte 10 von dem Niederhalter 13 zusammengedrückt wird. Es genügt aber, die Isolierung nur in einem kurzen Teilbereich des Schaftes 2 vorzusehen, dessen Mitte etwa an der Stelle des Metallfolie 12 im zusammengedrückten Zustand der Matte 10 liegt.

## Patentansprüche

1. Verfahren zum Befestigen einer in ihrem Oberflächenbereich (12) elektrisch leitenden, elastisch verformbaren Materiallage (10) an einem metallischen Träger (11) mittels eines Schweißbolzens (1), der durch die Materiallage (10) hindurchgesteckt und mit seiner Spitze (4) an dem Träger (11) durch Lichtbogenzündung angeschweißt wird, der an seinem hinteren Ende eine die Materiallage (10) haltenden Kopf (3) aufweist und der gegen elektrischen Kontakt mit dem leitenden Oberflächenbereich (12) isoliert ist, wobei eine Berührung mit dem Bolzenschaft (2) nur in einem isolierten Schaftbereich möglich ist,
**dadurch gekennzeichnet, daß** die Materiallage (10) während des Schweißvorgangs so weit zusammengedrückt wird, daß ihr leitender Oberflächenbereich (12) in Abstand vom unisolierten Bolzenkopf (3) gehalten wird.

2. Verfahren nach Anspruch 1, wobei die Materiallage (10) mittels eines den Schweißbolzen (1) umgebenden Niederhalters (13) zusammengedrückt wird.

3. Vorrichtung zum Befestigen einer in ihrem Oberflächenbereich elektrisch leitenden, elastisch verformbaren Materiallage (10) an einem metallischen Träger (11), umfassend
einen an seinem hinteren Ende mit einem Kopf (3) und mit einer Isolierung (6) versehenen Schweißbolzen (1),
ein Schweißgerät (9) zur Ausbildung eines Lichtbogens zwischen der Spitze (4) des durch die Materiallage (10) hindurchgesteckten Schweißbolzens (1) und dem Träger (11), und
einen Niederhalter (13), mit dem die Materiallage (10) während des Schweißvorgangs zusammengedrückt werden kann, **dadurch gekennzeichnet, daß**
das der Kopf (3) der Schweißbolzens (1) unisoliert ist und der Niederhalter (13) ein Zusammendrucken der Materiallage (10) so weit gestattet, daß ihr leitender Oberflächenbereich während des Schweißvorgangs in Abstand vom Bolzenkopf (3) gehalten wird und den Bolzenschaft (2) nur in einem isolierten Schaftbereich berühren kann.

4. Vorrichtung nach Anspruch 3, wobei der Niederhalter (13) als den Schweißbolzen (1) umgebender Ringkörper ausgebildet ist.

5. Vorrichtung nach Anspruch 3 oder 4, wobei der Niederhalter (13) mit dem Schweißgerät (9) vorzugsweise lösbar und vorzugsweise in Axialrichtung des Schweißbolzens (1) verstellbar verbunden ist.

6. Verfahren nach Anspruch 1 oder 2 bzw. Vorrichtung nach einem der Ansprüche 3 bis 5, wobei die Isolierung (6) eine auf den Bolzenschaft (2) aufgebrachte Beschichtung, vorzugsweise eine Lackierung und/oder eine den Schaft (2) umgebende Hülse, umfaßt.

7. Verfahren bzw. Vorrichtung nach Anspruch 6, wobei die Isolierung (6) nur am hinteren Bereich des Bolzenschaftes (2), vorzugsweise vom Bolzenkopf (3) bis im wesentlichen zur Hälfte der Schaftlänge, vorgesehen ist.

8. Verfahren bzw. Vorrichtung nach Anspruch 6 oder 7, wobei das vordere Ende der Isolierung (6) zur Bolzenspitze (4) und zur Bolzenachse (7) hin abgeschrägt (8) ist.

9. Verfahren nach einem der Ansprüche 1, 2 und 6 bis 8 bzw. Vorrichtung nach einem der Ansprüche 3 bis 8, wobei die Bolzenspitze (4) als Nagelspitze ausgebildet ist.

## Claims

1. A method of fixing an elastically deformable material layer (10) having an electrically conductive surface region (12) on a metallic support (11) by means of a welding stud (1) which is pushed through the material layer (10) and is arc-welded with its tip (4) to the support (11), which has at its rear end a head (3) retaining the material layer (10), and which is insulated to prevent electrical contact with the conductive surface region (12), wherein contact with the stud shaft (2) is possible within an insulated shaft region only,
**characterised in that** the material layer (10) during the welding process is compressed to such an extent that its conductive surface region (12) is maintained spaced from the stud head (3).

2. The method of claim 1, wherein the material layer (10) is compressed by means of a hold-down member (13) which surrounds the welding stud (1).

3. An apparatus for fixing an elastically deformable material layer (10) having an electrically conductive surface region to a metallic support (11), comprising
a welding stud (1) which is provided with a head (3) at its rear end and with an insulation (6),
a welding device (9) for establishing an arc between the tip (4) of the welding stud (1), which has been pushed through the material layer (10), and the support (11), and
a hold-down member (13) by which the material layer (10) can be compressed during the welding step,
**characterised in that** the head (3) of the welding stud (1) is not insulated and the hold-down member (13) permits compressing the material layer (10) to such an extent that its conductive surface region, during the welding step, is maintained spaced from the stud head (3) and can contact the stud shaft (2) within an insulated shaft region only.

4. The apparatus of claim 3, wherein the hold-down member (13) is formed as an annular body surrounding the welding stud (1).

5. The apparatus of claim 3 or claim 4, wherein the hold-down member (13) is connected to the welding device (9), preferably in a detachable manner and preferably so as to be adjustable in the axial direction of the welding stud (1).

6. The method of claim 1 or claim 2 or the apparatus of any one of claims 3 to 5, wherein the insulation (6) comprises a coating provided on the stud shaft (2), preferably a lacquer and/or a sleeve surrounding the shaft (2).

7. The method or apparatus of claim 6, wherein the insulation (6) is provided on the rear portion of the stud shaft (2) only, preferably extending from the stud head (3) to substantially one-half the shaft length.

8. The method or apparatus of claim 6 or claim 7, wherein the front end of the insulation (6) is chamfered toward the stud tip (4) and the stud axis (7).

9. The method of any of claims 1, 2 and 6 to 8 or the apparatus of any of claims 3 to 9, wherein the stud tip (4) is formed as a nail tip.

## Revendications

1. Procédé pour fixer une couche de matériau (10) élastique électriquement conducteur dans la zone de sa surface supérieure (12), sur un support métallique (11) au moyen d'un goujon à souder (1) qui est passé au travers de la couche de matériau (10) et dont la pointe (4) est soudée sur le support (11) par l'amorçage de l'arc, qui présente à son extrémité postérieure une tête (3) laquelle retient la couche de matériau (10), et qui est isolé contre le contact électrique avec la zone de surface conductrice (12), et un contact avec la tige (2) du goujon n'étant possible que dans une section isolée de la tige, **caractérisé en ce que** pendant l'opération de soudage, la couche de matériau (10) est comprimée de telle façon que sa zone de surface supérieure conductrice (12) est maintenue à distance de la tête (3) du goujon.

2. Procédé selon la revendication 1, **caractérisé en ce que** la couche de matériau (10) est comprimée au moyen d'un serre-tôle (13) qui entoure le goujon à souder (1).

3. Dispositif pour la fixation d'une couche de matériau (10) élastique électriquement conducteur dans la zone de sa surface supérieure, sur un support métallique (11), comprenant un goujon à souder (1) dont l'extrémité postérieure est munie d'une tête (3) et d'une isolation (6), et un appareil de soudage (9) pour la formation d'un arc électrique entre la pointe (4) du goujon à souder (1) passé au travers de la couche de matériau (10) et le support (11), et un serre-tôle (13) par lequel la couche de matériau (10) peut être comprimée pendant l'opération de soudage **caractérisé en ce que** la tête (3) du goujon à souder (1) n'est pas isolée et le serre-tôle (13) comprime la couche de matériau (10) de telle façon que sa zone de surface conductrice est maintenue à distance de la tête (3) pendant l'opération de soudage du goujon et ne peut entrer en contact avec la tige (2) du goujon que dans une section isolée de la tige.

4. Dispositif selon la revendication 3, dans lequel le serre-tôle (13) est réalisé sous la forme d'un corps annulaire qui entoure le goujon à souder (1).

5. Dispositif selon la revendication 3 ou 4, dans lequel le serre-tôle (13) est couplé de préférence de manière amovible avec l'appareil de soudage (9) et qu'il peut être déplacé de préférence dans le sens axial du goujon à souder (1).

6. Procédé selon la revendication 1 ou 2 et respectivement dispositif selon l'une des revendications 3 à 5, dans lesquels l'isolation (6) comprend un revêtement appliqué sur la tige (2) du goujon, de préférence un vernis et/ou une douille entourant la tige (2).

7. Procédé et respectivement dispositif selon la revendication 6, dans lesquels l'isolation (6) n'est prévue que dans la partie postérieure de la tige (2) du goujon, de préférence de la tête (3) du goujon jusqu'à sensiblement le milieu de la longueur de la tige.

8. Procédé et respectivement dispositif selon la revendications 6 ou 7, dans lesquels l'extrémité antérieure de l'isolation (6) est chanfreinée (8) en direction de la pointe (4) du goujon et de l'axe (7) du goujon.

9. Procédé selon l'une des revendications 1, 2 et 6 à 8 et respectivement dispositif selon l'une des revendications 3 à 8, **caractérisés en ce que** la pointe (4) du goujon est conformée en pointe de clou.
